# EUROPÄISCHE PATENTANMELDUNG

(11) **EP 3 530 482 A1**
(43) Veröffentlichungstag der Anmeldung: **28.08.2019**
(21) Anmeldenummer: 19000067.9
(22) Anmeldetag: 06.02.2019
(51) Int. Cl.: B60B 3/10, H02K 1/14, H02K 7/18, B60B 27/00, B60B 7/00, B62J 6/12, B60Q 1/32, B60B 7/20

(54) **RAD, INSBESONDERE LEICHTMETALLRAD**

(30) Priorität: 08.02.2018 DE 202018000629 U
(71) Anmelder: Ronal AG, 4624 Härkingen (CH)
(72) Erfinder: Muffatto, Giorgio, I-30035 Mirano (VE) (IT); Bachofner, Andreas, CH-4654 Lostorf (CH)
(74) Vertreter: Lichti - Patentanwälte Partnerschaft mbB

(57) **Zusammenfassung**

Zur Vermeidung der Notwendigkeit von Wechselbatterien bei Funktionselementen wird ein Rad, insbesondere Leichtmetallrad, mit einer Nabe (3) vorgeschlagen, die einen zylindrischen Hohlraum aufweist, wobei in dem zylindrischen Hohlraum der Nabe ein elektromagnetischer Energiegenerator (6) angeordnet ist.

## Beschreibung

Die Erfindung betrifft ein Rad, insbesondere Leichtmetallrad, mit einer Nabe, die einen zylindrischen Hohlraum aufweist.

Es ist wünschenswert in den sich relativ zur Fahrzeugkarosserie drehenden Rädern eines Kraftfahrzeuges elektrische Energie zur Verfügung zu haben, um verschiedene Funktionen auszuüben, die elektrische Energie benötigen. Es ist schwierig, von einer sich in der Fahrzeugkarosserie befindlichen Batterie zu oder in ein relativ zur Karosserie und der Batterie sich drehendes Rad Energie zu übertragen, damit diese im drehenden Rad zur Verfügung steht. Es wurde schon vorgeschlagen am Rad Erzeuger elektrischer Energie vorzusehen. Diese bedingen aber entweder eine Modifikation des Rades, wie eines Leichtmetallrades selbst, oder aber sind nur bei speziellen Rädern einsetzbar, wie bei solchen, bei denen nahezu die gesamte Stirnseite eines Rades durch eine diese radial und umfangsmäßig überdeckende Radkappe abgedeckt ist. Auch kann eine solche leicht abfallen und sind elektrische und elektronische Elemente in ihr äußeren Einflüssen ausgesetzt.

Der Erfindung liegt daher die Aufgabe zugrunde, ein Rad, wie insbesondere ein Leichtmetallrad, insbesondere für ein Kraftfahrzeug, dahingehend weiter zu entwickeln, dass im sich an einem Fahrzeug drehenden Rad ohne Notwendigkeit der Veränderung derselben und ohne großen Aufwand grundsätzlich bei sämtlichen derartigen Rädern in einfacher Weise elektrische Energie zur Verfügung gestellt werden kann.

Erfindungsgemäß wir die genannte Aufgabe bei einem gattungsgemäßen Rad dadurch gelöst, dass in dem zylindrischen Hohlraum der Nabe ein elektromagnetischer Energiegenerator angeordnet ist.

Die Erfindung sieht also vor, den zylindrischen Hohlraum einer der Nabe eines solches Rades, die über sich an der Außenseite des Rades radial erstreckende Radialelemente mit der eigentlichen Felge verbunden ist und in deren zylindrischen Hohlraum eine Achse des Fahrzeugs ragt, zu nutzen, indem in einer in diesem zylindrischen Hohlraum angeordneten Radkappe ein elektrischer Energieerzeuger vorgesehen wird, um im oder am drehenden Rad unmittelbar elektrische Energie zu erzeugen und zur Verfügung zu stellen.

In bevorzugter Ausgestaltung der Erfindung ist dabei vorgesehen, dass der Energiegenerator relativ zueinander drehbar ein Pendel als Stator und ein Spulensystem mit mindestens einer Spule als Rotor aufweist, wobei insbesondere der Rotor drehfest mit der Nabe verbunden ist, während der Stator frei drehbar relativ zum Rotor angeordnet ist.

Damit der Stator sich nicht mit dem drehenden Rad und mit diesem drehfest angeordneten Rotor mit dreht, sondern vielmehr im Wesentlichen parallel zur Erdanziehungskraft ausgerichtet bleibt, sieht eine Weiterbildung vor, dass der Stator nicht kreissymmetrisch ausgebildet ist, wobei insbesondere der Stator über einen Teilumfang ein radial ausgreifendes Gewichtsteil aufweist.

Grundsätzlich kann dabei vorgesehen sein, dass der elektromagnetische Energiegenerator in einer Nabenkappe angeordnet ist, wobei weiterhin mit dem Rotor drehfest ein elektrischer Schaltkreis mit einer Energiesteuerung und eine aufladbare Batterie verbunden sind, wobei der elektrische Schaltkreis mit dem Energiegenerator einerseits und andererseits der aufladbaren Batterie verbunden ist. Die Nabenkappe ist dabei vorzugsweise derart ausgestaltet, dass der elektromagnetische Energiegenerator ein Gehäuse mit zwei miteinander verbindbaren Gehäuseteilen aufweist.

Eine Weiterbildung sieht vor, dass elektrische Energieerzeuger und/oder die wiederaufladbare Batterie über den elektrischen Schaltkreis mit einem elektrischen Verbraucher bzw. einer elektrischen Last verbunden sind, wobei insbesondere der elektrische Verbraucher ein elektrische Energie in mechanische Energie wandelnder Aktuator ist. Ein solcher Aktuator kann dazu dienen, Zwischenräume zwischen Radialrippen eines Leichtmetallrades durch Abdeckungen zu schließen, um den Luftwiderstand des Rades zu reduzieren und/oder im Bremsfall zu öffnen, um die Bremse zu kühlen. Sensoren als elektrische Last können Reifendruck, Temperatur, Umdrehungsgeschwindigkeit und andere Werte erfassen. Als elektrische Verbraucher können auch Leuchtmittel (LEDs) vorgesehen sein, die dauernd leuchten oder im Warnfall zum Aufleuchten gebracht werden.

In weiterer Ausgestaltung ist vorgesehen, dass die elektrische Schaltung einen Drahtlosempfänger für eine Fernbedienung aufweist. Darüber hinaus kann vorgesehen sein, dass die mit dem Generator verbundene elektrische Schaltung den Generator gemäß der Drehgeschwindigkeit des Rades steuert.

In weiterer bevorzugter Ausgestaltung ist vorgesehen, dass ein drahtloser Energieüberträger, wie eine Drahtspule oder eine RF-Antenne mit dem Energiegenerator verbunden ist und/oder mindestens eine Antenne zur Datenübertragung vorgesehen ist, wobei Datenübertragungen hier Daten senden und/oder Daten empfangen beinhalten kann. In äußerster bevorzugter Weiterbildung ist dabei vorgesehen, dass die Antenne zur Energieübertragung und eine Antenne zur Datenübertragung als eine Antenne ausgebildet ist.

Eine weitere bevorzugte Ausgestaltung ist gekennzeichnet durch, eine Sensoreinheit an der Felge des Rades zum Messen von Reifendruck und/oder -Temperatur, wobei insbesondere die Sensoreinheit mindestens einen Sensor einen Mikrochip und mindestens eine Antenne zum Energieempfang und/oder zur Datenübertragung aufweist.

Bei dem Druck- und/oder Temperatursensor handelt es sich vorzugsweise um einen passiven Sensor. Die Sensoreinheit wird, wie dargelegt, von der in der Nabe angeordneten Sensoreinheit an der Felge, als den Reifen aufnehmendes Teil des Rades durch die vorstehend genannten Merkmale vom in der Nabe angeordneten Energiegenerator mit Energie versehen, so dass der Sensor seine Messaufgaben erfüllen kann und darüber hinaus die gemessenen Daten entweder an den Schaltkreis zur Verarbeitung und/oder Weiterleitung oder aber eine separate Empfangs- und Verarbeitungseinheit am Fahrzeug übermitteln kann.

Durch die erfindungsgemäße Weiterbildung wird die Notwendigkeit von Gewicht- und Unwucht verursachenden Batterien an der Felge zur Elektrizitätsversorgung der Sensoreinheit vermieden und damit hiermit verbundene Nachteile vermieden bzw. reduziert, insbesondere ist auch der an sonst notwendige Ausgleich der Unwucht nicht vorzunehmen.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im Einzelnen erläutert ist.

Dabei zeigt:
- Fig. 1: Einen Radialschnitt durch ein Rad mit erfindungsgemäß ausgebildeter Nabenkappe;
- Fig. 2: eine Explosionsdarstellung der erfindungsgemäßen Ausgestaltung der Nabenkappe des Rades;
- Fig. 3: eine blockschaltbildartige Prinzipdarstellung eines Anwendungsfalls des Erfindungsgegenstandes; und
- Fig. 4: eine schematische Teildarstellung eines erfindungsgemäßen Rades in Seitenansicht.

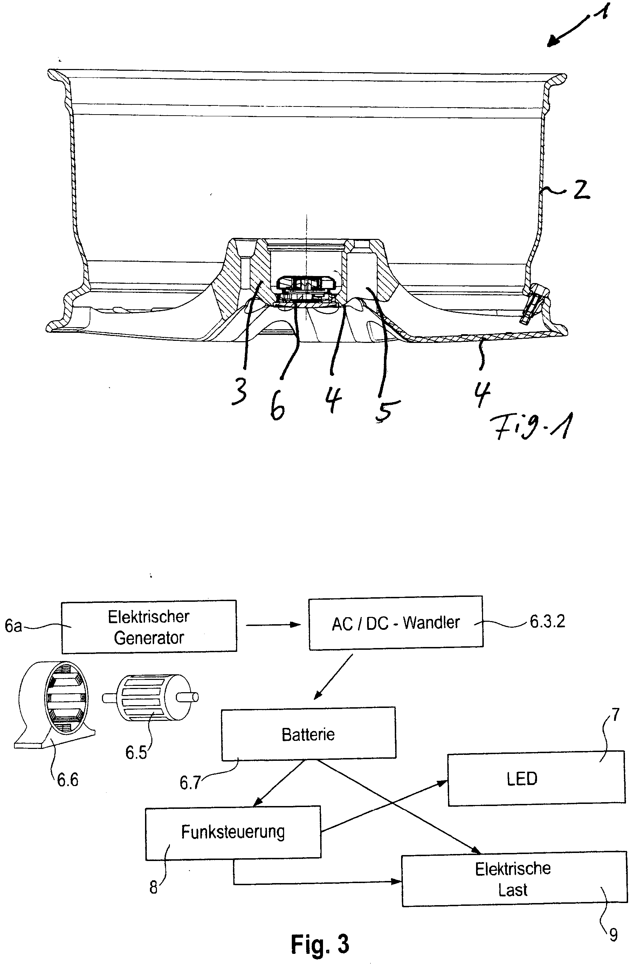

Bei dem in der Fig. 1 im Radialschnitt dargestellten Rad 1 handelt es sich um ein Kraftfahrzeugrad, insbesondere ein Leichtmetallkraftfahrzeugrad aus einer Aluminiumlegierung. Das Rad 1 weist in üblicher Weise eine Felge 2 und eine zentrale Nabe 3 auf, die koaxial zueinander durch ein sich zwischen Nabe 3 Radialteil 4. Dieses kann eine Radscheibe, auch mit Unterbrechungen, sein oder aber aus mehreren über den Umfang des Rades 1 gleich verteilten sich von der Nabe 3 zur Felge 2 hin erstreckenden Radspeichen, beispielsweise fünf oder sieben Radspeichen, bestehen.

Die Nabe 3 ist hohlzylindrisch ausgebildet, wobei in ihren Hohlraum 3.1 im an einem Fahrzeug montierten Zustand eine Fahrzeugachse ragt, während das Rad selbst über durch die Radnabe umgebende Durchbrüche hindurchgesteckte Verbindungsschrauben mit einer mit ihrer Achse des Fahrzeugs fest verbundenen Befestigungsscheibe verbunden sind, so dass bei Drehung der Achse des Fahrzeugs das Rad ebenfalls in Drehung versetzt wird bzw. bei unten angetriebenem Rad dieses auf der Achse drehen kann.

Vorstehendes beschreibt die übliche Ausgestaltung eines solchen Kraftfahrzeugrads.

Im axial außen liegenden Bereich des Hohlraums 3.1 der Nabe 3 ist eine Nabenkappe 6 drehfest eingesetzt, wie dies der Fig. 1 zu entnehmen ist. Sie nimmt einen geringen Teil der äußeren Höhe des Hohlraums 3.1 der Nabe 3 ein.

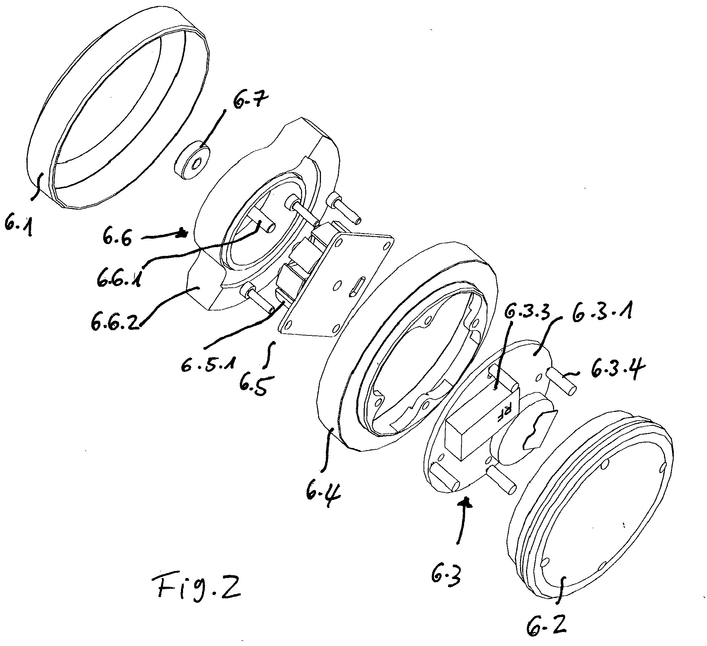

Die Nabenkappe 6 mit ihrer weiteren erfindungsgenmäßen Ausgestaltung ist in einer Explosionsdarstellung in der Fig. 2 dargestellt. Sie weist zwei Deckteile 6.1 und 6.2 auf, wobei sie mit letzterem fest in der Nabe 3 eingesetzt ist.

Zwischen den Deckteilen 6.1 und 6.2 ist - in der Fig. 2 von rechts nach links - zunächst ein elektrischer Schaltkreis 6.3 auf einer Platine 6.3.1 angeordnet, der mit dem Deckteil 6.2 über Stifte 6.3.4 fest verbunden ist. Der elektronische Schaltkreis 6.3 weist verschiedene elektronische Elemente auf, so einen Mikroprozessor als Energiesteuerung und einen Gleichrichter.

Dem folgt ein Haltering 6.4, der ebenso wie die Platine 6.3.1 drehfest mit den Deckteilen 6.1, 6.2 verbunden ist und drehfest ein erstes Dynamoteil hält. Dieses ist im dargestellten Ausführungsbeispiel ein mit elektrischen Spulen 6.5.1 versehenes elektrisches Dynamoteil in Form eines Rotors 6.5. Dieses ist von einem Stator 6.6 umgeben (in Fig. 3 links oben in Explosionsdarstellung gezeigt). Die Teile 6.4 und 6.5 bilden einen elektrischen Energiegenerator 6a.

Relativ zu diesem drehbar über eine Achse 6.6.1 ist ein nicht kreissymmetrisches Pendel 6.6 vorgesehen, das asymmetrisch derart ausgestaltet ist, dass es über einen Teil des Umfanges mit einem radial vergrößerten Gewichtsteil 6.6.2 versehen ist. Das Pendel 6.6 besteht aus ferromagnetischem Material. Schließlich ist eine aufladbare Batterie 6.7 vorgesehen, die drehfest mit dem Deckteil 6.1 verbunden ist und mit der Schaltplatine 6.3 in elektrischer Verbindung steht (nicht dargestellt) und durch diese aufgeladen werden kann sowie über diese auch ihre elektrische Ladung wieder abgeben kann zur Versorgung eines elektrischen Verbrauchers.

Dreht sich das Rad 1, in dessen Nabe die Nabenkappe 6 eingesetzt ist, so drehen sich die Teile 6.1-6.5, 6.7 mit dem Rad, während das Pendel 6.6 aufgrund seiner asymmetrischen Ausgestaltung und der Unwucht oder dem Gewicht 6.6.2 im Raum durch die Erdanziehung in einer festen statischen Position relativ zur Ausrichtung der Gravitationskraft bleibt. Aufgrund der drehenden Elektromagneten 6.5.1 bzw. Spulen wird in diesen elektrischer Strom erzeugt, der über den elektrischen Schaltkreis 6.3 gesteuert durch die auf dieser befindlichen elektronischen Elemente, insbesondere den Mikroprozessor, die Batterie 6.7 aufladen kann.

Derart wird erfindungsgemäß ein elektrischer Energiegenerator am Ort des Rades und zwar genau innerhalb dessen Nabe geschaffen. Die derart erzeugte Energie kann in unterschiedlichster Weise benutzt werden, beispielsweise in einer einfachen Ausführungsform zur Versorgung einer in der Nabe 3 des Rades befindlichen Leuchteinrichtung, wie einer LED.

Die Fig. 3 zeigt ein entsprechendes Blockschaltbild mit dem elektrischen Generator 6a mit Stator 6.6 und Rotor 6.5, der die erzeugte elektrische Energie an einen auf der Platine 6.3.1 befindlichen Konverter 6.3.2 an den Gleichrichter weitergibt, über welchen die wieder aufladbare Batterie 6.7 gesteuert geladen werden kann. Weiter ist in der Fig. 3 eine elektrische Last 9 und ein Leuchtmittel in Form einer LED 7 dargestellt, die ein- oder ausgeschaltet werden kann. Hierzu kann eine Fernbedienung 8 mit vorgesehen sein.

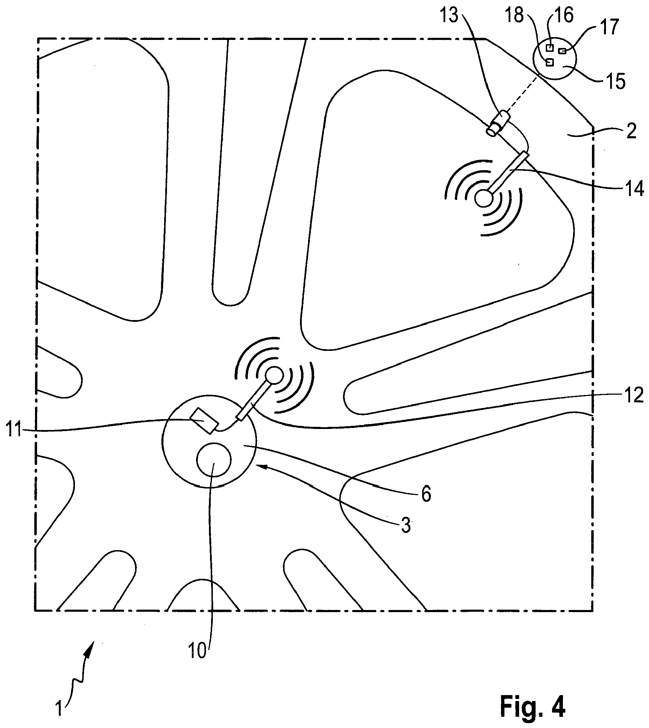

Die Fig. 4 zeigt eine teilweise Seitenansicht eines erfindungsgemäßen Rades 1 mit einer Felge 2 und einer Nabe 3 in schematischer Darstellung auf. Im Hohlraum der Nabe 3 ist, wie in den vorherigen Figuren dargestellt, eine Nabenkappe 6 mit den unter Bezug auf die vorstehenden Zeichnungen beschriebenen Energiegenerator angeordnet. Eine Elektronikeinheit 10 ist schematisch dargestellt. In der Nabenkappe 6 ist weiterhin eine Sende- und Empfangseinheit 11 angeordnet, die mit einer Antenne 12 versehen ist. Die Sende- und Empfangseinheit dient zunächst zur drahtlosen Übertragung von Energie über die Antenne 12, aber auch zur Datenübertragung, d.h. zum Daten senden und/oder - empfangen.

Die Felge ist mit einer Sensoreinheit 13 versehen, die ebenfalls mit einer Antenne 14 verbunden ist. Die Antennen 12, 14 sind im dargestellten Ausführungsbeispiel als RF-Antennen zur Fernfeldübertragung, auch von Energie dargestellt, es können sich hierbei aber auch um Spulen zur Energienahfeldübertragung handeln.

In der Sensoreinheit 13 ist, wie schematisch seitlich ausgeblendet ist, eine Elektronikeinheit 15 mit Sensor 16, Mikrochip und/oder Mikroprozessor 7 sowie Übertragungseinheit 18, die unmittelbar mit der Antenne 14 verbunden ist, angeordnet.

Derart wird erreicht, dass die Sensoreinheit 14 batterielos ausgebildet sein kann und ihre Energieversorgung des Sensors 16 aber auch der elektronischen Teile 17 drahtlos vom Energiegenerator in der Nabe 3 erhält und die Daten entweder an einer elektronisch Verarbeitungseinheit in der Nabenkappe 6 oder aber an eine andere Empfangseinheit im Kraftfahrzeug übertragen werden können.

## Patentansprüche

1. Rad, insbesondere Leichtmetallrad, mit einer Nabe (3), die einen zylindrischen Hohlraum (3.1) aufweist, **dadurch gekennzeichnet, dass** in dem zylindrischen Hohlraum (3.1) der Nabe ein elektromagnetischer Energiegenerator (6.5, 6.6) angeordnet ist.

2. Rad nach Anspruch 1, **dadurch gekennzeichnet, dass** der Energiegenerator (6.5, 6.6) relativ zueinander drehbar ein Pendel als Stator (6.6) und ein Spulensystem mit mindestens einer Spule als Rotor (6.5) aufweist.

3. Rad nach Anspruch 2, **dadurch gekennzeichnet, dass** der Rotor (6.5) drehfest mit der Nabe (3) verbunden ist, während der Stator (6.6) frei drehbar relativ zum Rotor (6.5) angeordnet ist.

4. Rad nach Anspruch 2 oder 3, **dadurch gekennzeichnet, dass** der Stator (6.6) nicht kreissymmetrisch ausgebildet ist.

5. Rad nach Anspruch 4, **dadurch gekennzeichnet, dass** der Stator über einen Teilumfang ein radial ausgreifendes Gewichtsteil (6.6.2) aufweist.

6. Rad nach einem der vorangehenden Ansprüche, **dadurch gekennzeichnet, dass** der elektromagnetische Energiegenerator (6.5, 6.6) in einer Nabenkappe (6) angeordnet ist.

7. Rad nach einem der vorangehenden Ansprüche, **dadurch gekennzeichnet, dass** mit dem Rotor (6.5) drehfest ein elektrischer Schaltkreis (6.3) mit einer Energiesteuerung und eine aufladbare Batterie verbunden sind, wobei der elektrische Schaltkreis (6.3) mit dem Energiegenerator (6.5, 6.6) einerseits und andererseits der aufladbaren Batterie (6.7) verbunden ist.

8. Rad nach einem der vorangehenden Ansprüche, **dadurch gekennzeichnet, dass** der elektromagnetische Energiegenerator (6.5, 6.6) ein Gehäuse mit zwei miteinander verbindbaren Gehäuseteilen (6.1, 6.2) aufweist.

9. Rad nach einem der vorangehenden Ansprüche, **dadurch gekennzeichnet, dass** der elektrische Energieerzeuger (6.5, 6.6) und/oder die wiederaufladbare Batterie (6.7) über den elektrischen Schaltkreis (6.3) mit einem elektrischen Verbraucher verbunden sind.

10. Rad nach Anspruch 9, **dadurch gekennzeichnet, dass** der elektrische Verbraucher ein elektrische Energie in mechanische Energie wandelnder Aktuator ist.

11. Rad nach einem der vorangehenden Ansprüche, **dadurch gekennzeichnet, dass** die elektrische Schaltung (6.3) einen Drahtlosempfänger für eine Fernbedienung aufweist.

12. Rad nach einem der vorangehenden Ansprüche, **dadurch gekennzeichnet, dass** die mit dem Generator verbundene elektrische Schaltung (6.3) den Generator gemäß der Drehgeschwindigkeit des Rades steuert.

13. Rad nach einem der vorangehenden Ansprüche, **gekennzeichnet durch** einen mit dem Energiegenerator (6.5, 6.6) verbundenen drahtlosen Energieüberträger (11, 12), wie einer Spule oder einer RF-Antenne (12).

14. Rad nach einem der Ansprüche 7 bis 13 **gekennzeichnet durch** mindestens eine Antenne (12) zur Datenübertragung.

15. Rad nach Anspruch 13 und 14, **dadurch gekennzeichnet, dass** die Antenne zur Energieübertragung und eine Antenne zur Datenübertragung als eine Antenne (12) ausgebildet ist.

16. Rad nach einem der vorangehenden Ansprüche, **gekennzeichnet durch**, eine Sensoreinheit (13) an der Felge (2) des Rades (1) zum Messen von Reifendruck und/oder -Temperatur.

17. Rad nach Anspruch 16, **dadurch gekennzeichnet, dass** die Sensoreinheit (13) mindestens einen Sensor (16) einen Mikrochip (17) und mindestens eine Antenne (14) zum Energieempfang und/oder zur Datenübertragung aufweist.
